# FASCICULE DE BREVET EUROPEEN

(11) **EP 3 542 089 B1**
(45) Date de publication et mention de la délivrance du brevet: **09.02.2022**
(21) Numéro de dépôt: 17809219.3
(22) Date de dépôt: 17.11.2017
(51) Int. Cl.: F16L 11/08, E21B 17/01, B32B 1/08, B32B 27/34, B32B 27/32, B32B 27/30, B32B 27/28, B32B 27/12, B32B 27/08, B32B 5/26

(54) **CONDUITE FLEXIBLE DE TRANSPORT DE FLUIDE, INSTALLATION ET PROCÉDÉ ASSOCIÉS**
FLEXIBLES FLÜSSIGKEITSTRANSPORTROHR SOWIE ZUGEHÖRIGE ANLAGE UND VERFAHREN
FLEXIBLE FLUID TRANSPORT PIPE, AND ASSOCIATED FACILITY AND METHOD

(30) Priorité: 18.11.2016 FR 1661239
(43) Date de publication de la demande: 25.09.2019
(73) Titulaire: TECHNIP N-POWER, 92400 Courbevoie (FR)
(72) Inventeur: DO, Anh-Tuan, 95240 Cormeilles en Parisis (FR); ESTRIER, Pascal, 76600 Le Havre (FR); PERREAU-SAUSSINE, Dominique, 92100 Boulogne (FR)
(74) Mandataire: Lavoix
(86) Numéro de dépôt international: PCT/EP2017/079681
(87) Numéro de publication internationale: WO 2018/091693

(56) Documents cités:
- FR-A1- 2 973 469
- FR-A1- 2 987 883
- FR-A1- 3 016 019
- GB-A- 2 504 065
- US-A- 4 850 395
- US-A1- 2011 168 288
- US-A1- 2013 263 963

## Description

La présente invention concerne une conduite flexible de transport de fluide, comprenant :
- une gaine tubulaire d'axe central définissant un passage interne de circulation de fluide ;
- une structure composite tubulaire, appliquée sur la gaine tubulaire et liée à la gaine tubulaire, la structure composite tubulaire comportant au moins deux couches de renfort laminées, chaque couche de renfort comprenant une matrice en polymère et des fibres de renfort ;
- au moins une nappe d'armures de traction, non liée à la structure composite tubulaire, la nappe d'armures de traction comprenant au moins un élément d'armure enroulé autour de la structure composite tubulaire.

La conduite flexible est par exemple réalisée suivant les documents normatifs publiés par l'American Petroleum Institute (API), API 17J, 4^{e} édition Mai 2014 et API RP 17B, 5e édition - Mai 2014).

La conduite est généralement formée d'un ensemble de couches concentriques et superposées. Au sens de la présente invention, une couche est considérée comme « non liée » à une autre couche, dès lors qu'elle est apte à se déplacer longitudinalement par rapport aux couches adjacentes lors d'une flexion de la conduite. En particulier, une couche non liée est une couche dépourvue de matériau liant la raccordant aux couches adjacentes.

Les conduites flexibles du type précité sont utilisées notamment en mer profonde dans l'industrie pétrolière et gazière, et s'étendent généralement à travers une étendue d'eau entre un ensemble de surface et un ensemble de fond. Ces conduites peuvent également s'étendre entre deux ensembles de surface.

L'ensemble de fond est destiné à recueillir le fluide exploité dans le fond de l'étendue d'eau. L'ensemble de surface est généralement flottant. Il est destiné à collecter et à distribuer le fluide. L'ensemble de surface peut être une plateforme semi-submersible, un FPSO ou un autre ensemble flottant.

D'une manière connue, une telle conduite comporte une structure interne tubulaire comprenant au moins une gaine tubulaire. La conduite comporte des nappes d'armures de traction disposées autour de la structure interne tubulaire.

Dans certains cas, pour l'exploitation de fluides en eaux profondes, la conduite flexible présente une longueur supérieure à 800 m, voire supérieure à 1000 m ou à 2000 m pour des applications en eaux ultra-profondes.

Pour les grandes profondeurs, la pression hydrostatique s'appliquant à l'extérieur de la conduite devient critique lorsque la pression interne de la conduite diminue brusquement, par exemple lors d'un arrêt de production.

Dans ce cas, pour éviter l'écrasement (« collapse » en anglais) de la conduite sous l'effet de la différence de pression entre l'extérieur de la conduite et l'intérieur de la conduite, il est connu de placer dans la gaine tubulaire une carcasse interne. La carcasse interne est formée par exemple d'un feuillard métallique profilé, enroulé en spirale. Les spires du feuillard sont avantageusement agrafées les unes aux autres, ce qui permet de reprendre les efforts radiaux d'écrasement.

La conduite est alors désignée par le terme anglais « rough bore », en raison de la géométrie de la carcasse.

Une telle solution résout le problème de l'écrasement de la conduite, mais ne donne pas entière satisfaction, notamment aux grandes profondeurs.

En premier lieu, la présence d'une carcasse agrafée dans le passage de circulation de fluide créé des perturbations dans l'écoulement du fluide circulant dans le passage, qui peuvent conduire à des phénomènes indésirables. En outre, aux grandes profondeurs, les phénomènes de corrosion par fatigue deviennent très significatifs. La gaine tubulaire a par ailleurs tendance à fluer vers l'intérieur dans les déjoints de la carcasse.

Pour pallier ces problèmes, GB2504065 décrit une conduite flexible du type précité, comportant une structure composite de renfort appliquée autour de la gaine interne tubulaire et liée à celle-ci. Le document EP1090243A1 décrit également une conduite flexible ayant une structure tubulaire composite de renfort autour de la gaine interne tubulaire.

Cette structure composite de renfort remplace à la fois la voûte de pression disposée à l'extérieur de la gaine interne tubulaire et la carcasse disposée à l'intérieur de la gaine interne tubulaire.

Ceci allège la conduite, et résout partiellement les problèmes précités. Néanmoins, l'utilisation d'une telle structure pose d'autres problèmes. En particulier, la structure composite étant réalisée à partir d'un enroulement d'une bande présentant un angle d'enroulement élevé par rapport à l'axe de la conduite (de l'ordre de 90°), une délamination de la structure composite de renfort peut se produire, notamment lorsque la conduite évolue en statique et en dynamique et subit des déformations significatives, en particulier en flexion. Ceci augmente le rayon de courbure minimal de la conduite.

Ceci est le cas notamment lors de la pose, ou sous l'effet des mouvements de la conduite dans l'étendue d'eau.

Un but de l'invention est donc d'obtenir une conduite flexible de transport de fluide très adaptée aux grandes profondeurs, tout en présentant des performances mécaniques élevées, notamment en flexion.

A cet effet, l'invention a pour objet une conduite du type précité, caractérisée en ce que la structure composite tubulaire comporte au moins une couche anti-délamination interposée entre deux couches de renfort laminées.

La conduite selon l'invention peut comprendre l'une ou plusieurs des caractéristiques suivantes, prise(s) isolément ou suivant toute combinaison techniquement possible :
- la ou chaque élément d'armure est enroulé en hélice autour de l'axe central avec un angle d'enroulement compris entre 25° et 45° ;
- la couche anti-délamination est formée à partir d'un film polymère, d'un film polymère imprégné de fibres et/ou de nanofibres, ou/et d'un mat de fibres pré-imprégnées avec un matériau polymère ;
- le matériau polymère de la couche anti-délamination est de même nature que le matériau polymère formant la matrice d'au moins une couche de renfort ;
- l'épaisseur de la ou de chaque couche anti-délamination est inférieure à 200 microns, et est notamment comprise entre 50 microns et 200 microns ;
- au moins une couche de renfort est formée à partir d'un enroulement hélicoïdal d'une bande composite suivant un premier angle d'enroulement autour de l'axe central, le premier angle d'enroulement étant compris entre 55° et 85°, notamment entre 60° et 80° ;
- une première couche de renfort est formée à partir d'un enroulement hélicoïdal d'une bande composite suivant un premier angle d'enroulement autour de l'axe central, la deuxième couche de renfort située à l'opposé de la première couche de renfort par rapport à la couche anti-délamination étant formée à partir d'un enroulement hélicoïdal d'une bande composite suivant un deuxième angle d'enroulement autour de l'axe central, opposé au premier angle d'enroulement autour de l'axe central ;
- la structure composite tubulaire comporte au moins trois couches de renfort laminées, et entre chaque paire de couches de renfort adjacentes, une couche anti-délamination ;
- la structure composite tubulaire comprend au moins trois couches de renfort laminées, une première couche de renfort et une deuxième couche de renfort étant au contact l'une de l'autre, la structure composite tubulaire comportant une couche anti-délamination interposée entre la deuxième couche de renfort et la troisième couche de renfort ;
- l'épaisseur de chaque couche de renfort est inférieure à 1 mm et est comprise notamment entre 0,1 mm et 1 mm ;
- une frette enroulée en spirale autour de la ou de chaque nappe d'armures de traction.

L'invention a également pour objet une installation d'exploitation de fluide à travers une étendue d'eau, comportant :
- un ensemble de fond ;
- un ensemble de surface ;
- une ligne de transport de fluide, raccordant l'ensemble de fond à l'ensemble de surface, la ligne comprenant un tronçon de fond de transport de fluide, s'appuyant sur le fond de l'étendue d'eau, un tronçon sensiblement vertical de colonne montante, et un tronçon intermédiaire courbé raccordant le tronçon de fond au tronçon sensiblement vertical, au moins un du tronçon de fond, du tronçon sensiblement vertical, et du tronçon intermédiaire étant formé d'une conduite flexible telle que définie plus haut.

L'installation selon l'invention peut comprendre la caractéristique suivante :
la ligne comprend un tronçon de tête formé d'une conduite flexible non liée.

L'invention a également pour objet un procédé de fabrication d'une conduite flexible, comprenant les étapes suivantes :
- fourniture d'une gaine tubulaire d'axe central définissant un passage interne de circulation de fluide ;
- formation d'une structure composite tubulaire, appliquée sur la gaine tubulaire et liée à la gaine tubulaire, la structure composite tubulaire comportant au moins deux couches de renfort laminées, chaque couche de renfort comprenant une matrice en polymère et des fibres de renfort ;
- disposition, autour de la structure composite tubulaire, d'au moins une nappe d'armures de traction, non liée à la structure composite tubulaire, la ou chaque nappe d'armures de traction comprenant au moins un élément d'armure enroulé autour de la structure composite tubulaire ;
caractérisé en ce que la structure composite tubulaire comporte au moins une couche anti-délamination interposée entre deux couches de renfort laminées.

Le procédé selon l'invention peut comprendre la caractéristique suivante :
la formation de la structure composite tubulaire comprend les étapes suivantes :
   - enroulement autour de la gaine tubulaire d'une bande composite comportant une matrice en polymère et des fibres de renfort, et chauffage de la bande composite enroulée pour former une première couche de renfort ;
   - enroulement autour de la première couche de renfort, d'une bande d'un film polymère, d'un film polymère imprégné de fibres, ou/et d'un mat de fibres pré-imprégnées avec un matériau polymère, et chauffage de la bande de film polymère, de film polymère imprégné de fibres, ou/et de mat de fibres pré-imprégnées avec un matériau polymère pour former la couche anti-délamination, et pour l'assembler sur la première couche de renfort ;
   - enroulement autour de la couche anti-délamination d'une bande composite comportant une matrice en polymère et des fibres de renfort, chauffage de la bande composite enroulée pour former une deuxième couche de renfort.

L'invention sera mieux comprise à la lecture de la description qui va suivre, donnée uniquement à titre d'exemple, et faite en se référant aux dessins annexés, sur lesquels :
- la figure 1 est une vue en perspective partiellement écorchée d'une première conduite flexible selon l'invention ;
- la figure 2 est une vue schématique partielle, prise en coupe, d'une structure composite de renfort de la conduite de la figure 1 ;
- les figures 3 et 4 sont des vues partielles, partiellement en section, d'exemples de bandes composites destinées à former une couche de renfort de la structure composite de renfort de la figure 2 ;
- la figure 5 est une vue schématique, en perspective partielle, d'un poste de fabrication de la structure composite de renfort de la figure 2 ;
- la figure 6 est une vue d'un détail du poste de fabrication de la figure 5 ;
- la figure 7 est une vue analogue à la figure 2, pour une deuxième conduite flexible selon l'invention ;
- la figure 8 est une vue analogue à la figure 2, pour une troisième conduite flexible selon l'invention ;
- la figure 9 est une vue schématique d'une installation d'exploitation de fluide comportant une ligne de production formée au moins partiellement d'une conduite flexible selon l'invention.

Dans tout ce qui suit, les termes « extérieur » et « intérieur » s'entendent respectivement comme plus éloigné radialement de l'axe de la conduite flexible et comme plus proche radialement de l'axe de la conduite flexible.

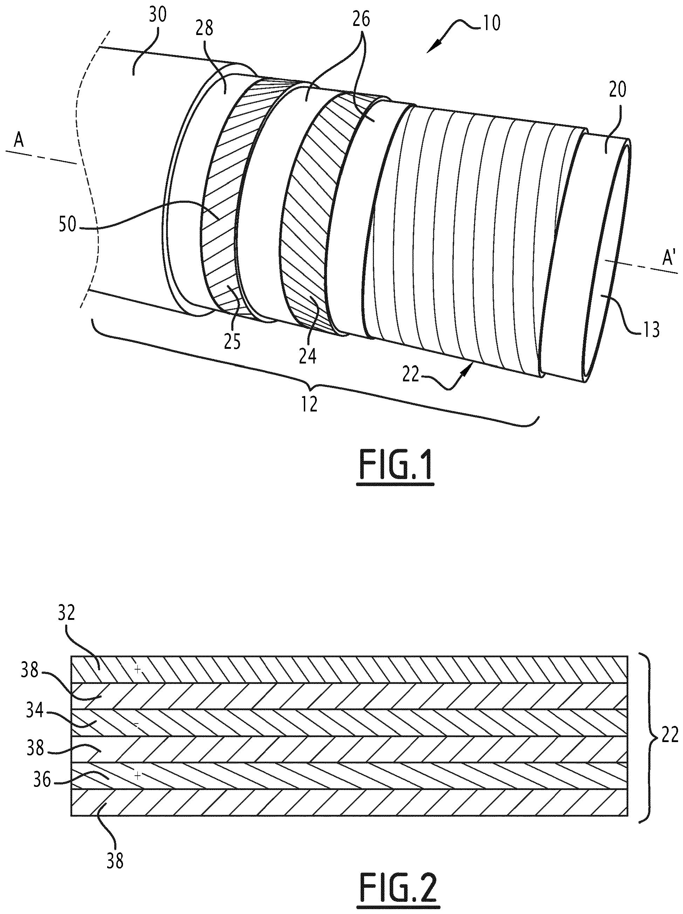

Une première conduite flexible 10 selon l'invention est illustrée schématiquement par les figures 1 et 2.

La conduite flexible 10 comporte un tronçon central 12 illustré en partie sur la figure 1. Elle comporte, à chacune des extrémités axiales du tronçon central 12, un embout d'extrémité (non visible)

En référence à la figure 1, la conduite 10 délimite un passage central 13 de circulation d'un fluide, avantageusement d'un fluide pétrolier. Le passage central 13 s'étend suivant un axe A-A', entre l'extrémité amont et l'extrémité aval de la conduite 10. Il débouche à travers les embouts.

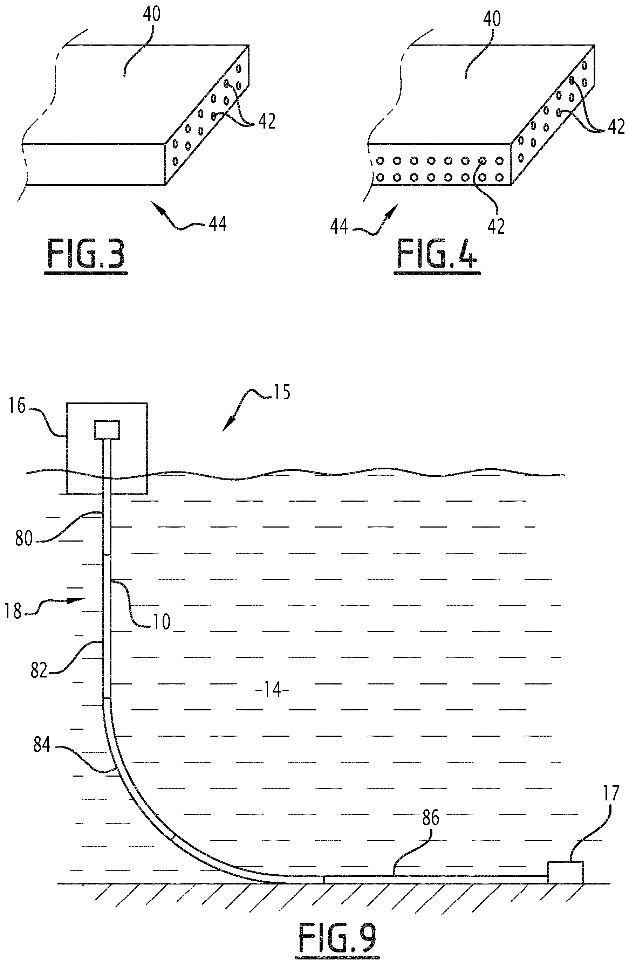

La conduite flexible 10 est destinée à être disposée à travers une étendue d'eau 14 (visible sur la figure 9) dans une installation 15 d'exploitation de fluide, notamment d'hydrocarbures.

L'étendue d'eau 14 est par exemple, une mer, un lac ou un océan. La profondeur de l'étendue d'eau au droit de l'installation d'exploitation de fluide est par exemple comprise entre 500 m et 4000 m.

L'installation d'exploitation de fluide 15 comporte un ensemble de surface 16, notamment flottant, et un ensemble de fond 17 qui sont généralement raccordés entre eux par une ligne 18 comprenant la conduite flexible 10.

En référence à la figure 1, la conduite flexible 10 est du type décrit dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts situés aux extrémités de la conduite.

La conduite 10 comporte au moins une gaine interne tubulaire 20 à base de matériau polymère constituant avantageusement une gaine de pression, et selon l'invention, une structure composite de renfort 22 appliquée autour de la gaine tubulaire 20 en étant liée à celle-ci.

La conduite 10 comporte en outre une pluralité de nappes d'armures de traction 24, 25 disposées extérieurement par rapport à la structure composite de renfort 22.

Avantageusement, et selon l'utilisation souhaitée, la conduite 10 comporte en outre des couches anti-usure 26, interposées entre la structure composite de renfort 22 et les nappes d'armures de traction 24, 25, ainsi qu'au sein des nappes d'armures de traction 24, 25. Elle comporte en outre avantageusement un ruban de renfort 28, enroulé autour des nappes d'armures de traction 24, 25 et une gaine externe 30, destinée à la protection de la conduite 10.

De manière connue, la gaine tubulaire 20 est destinée à confiner de manière étanche le fluide transporté dans le passage 13. Elle est formée en matériau polymère, de préférence thermoplastique. Par exemple, le polymère formant la gaine tubulaire 20 est à base d'une polyoléfine telle que du polyéthylène, à base d'un polyamide tel que du PA11 ou du PA12, ou à base d'un polymère fluoré tel que du polyfluorure de vinylidène (PVDF).

En variante, la gaine tubulaire 20 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine tubulaire 20 est par exemple comprise entre 5 mm et 20 mm.

La gaine tubulaire 20 est formée d'un tube en matériau polymère, d'une bande en matériau polymère assemblé, ou d'un mat de polymère imprégné.

La conduite flexible 10 est dépourvue de carcasse interne, elle est désignée par le terme anglais « smooth bore ». La surface interne de la gaine tubulaire 20 délimite directement le passage central 13.

La structure composite de renfort 22 est appliquée directement sur la gaine tubulaire 20. Elle est assemblée sur la gaine tubulaire 20 pour former un ensemble lié avec la gaine tubulaire 20.

Selon l'invention, et comme illustré par la figure 2, la structure composite de renfort 22 comporte une pluralité de couches composites de renfort 32 à 36 laminées, et une couche anti-délamination 38 interposée entre au moins deux couches de renfort 32 à 36.

En référence à la figure 3, chaque couche composite de renfort 32 comporte une matrice en polymère 40 et des fibres de renfort 42 noyées dans la matrice 40.

De préférence, la matrice 40 est formée d'un polymère, notamment d'un polymère thermoplastique. Le polymère de la gaine est avantageusement de même nature que celui de la matrice 40. Par « de même nature », on entend au sens de la présente invention que le polymère de la gaine tubulaire 20 et le polymère de la matrice 40 sont propres à fondre et à former un mélange intime, sans séparation de phase, après refroidissement.

Par exemple, le polymère formant la matrice 40 est à base d'une polyoléfine telle que du polyéthylène, à base d'un polyamide tel que du PA11 ou du PA12, ou à base d'un polymère fluoré tel que du polyfluorure de vinylidène (PVDF)

En variante, la matrice 40 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

Les fibres de renfort 42 sont par exemple des fibres de carbone, des fibres de verre, des fibres d'aramide, ou/et des fibres de basalte.

Les fibres de renfort 42 présentent généralement une résistance à la traction maximale supérieure à 2 GPa, avantageusement supérieure à 3 GPa et comprise par exemple entre 3 GPa et 6 GPa, telle que mesurée par la Norme ASTM D885M - 10A(2014)e1.

Elles présentent un module de traction supérieure à 50 GPa , compris par exemple entre 70 GPa et 500 GPa , notamment entre 50 GPa et 100 GPa pour les fibres de verre, entre 100 GPa et 500 GPa pour les fibres de carbone et entre 50 GPa et 200 GPa pour les fibres d'aramide, tel que mesurée par la Norme ASTM D885M - 10A(2014)e1.

La densité des fibres de renfort 42 est généralement comprise entre 1,4 g/cm³ et 3,0 g/cm³.

Les fibres de renfort 42 sont par exemple agencées de manière unidirectionnelle dans la matrice 40, comme visible sur la figure 3. Elles sont alors parallèles les unes aux autres. En variante, les fibres de renfort 42 sont croisées suivant deux directions orthogonales, comme visible sur la figure 4, ou encore sont disposées de manière aléatoire dans la matrice (non représenté).

La longueur des fibres de renfort 42 dans chaque couche composite 32 à 36 est supérieure à 300 m, et est notamment comprise entre 300 m et 4500 m.

Le diamètre des fibres composites est par exemple inférieur à 100 microns, et est notamment compris entre 4 microns et 10 microns.

De préférence, chaque couche composite 32 à 36 de renfort est formée d'un enroulement d'au moins une bande composite 44 présentant plusieurs couches de fibres 42 noyées dans une matrice 40 allongée, de longueur supérieure à au moins 10 fois sa largeur et à au moins 10 fois son épaisseur.

Par exemple, la longueur de chaque bande composite 34 est supérieure à 100 m et est comprise entre 100 m et 4500 m. La largeur de chaque bande composite 44 est comprise entre 6 mm et 50 mm. L'épaisseur de chaque bande composite 44 est comprise entre 0,1 mm et 1 mm.

Chaque bande composite 44 présente ainsi un module de traction supérieur à 10 MPa , notamment compris entre 30 MPa et 200 MPa, tel que mesuré par la Norme NF EN 2561, Janvier 1996, une élongation à la rupture supérieure à 1 %, notamment comprise entre 1 % et 5%, telle que mesurée par la Norme NF EN 2561, Janvier 1996, et une résistance à la traction maximale supérieure à 100 MPa , et notamment comprise entre 350 MPa et 3500 MPa telle que mesurée par la Norme NF EN 2561, Janvier 1996.

Lors de la réalisation de chaque couche de renfort 32 à 36, la ou chaque bande composite 44 est enroulée autour de l'axe A-A' de la gaine tubulaire 20, et est chauffée pour provoquer la fusion partielle de la matrice 40, et la liaison avec les spires successives de la bande composite 44, et/ou avec les couches adjacentes qui peuvent être d'autres couches de renfort 32 à 36, des couches anti-délamination 38 ou la gaine tubulaire 20.

La valeur absolue de l'angle d'enroulement β de chaque bande composite 44 par rapport à l'axe A-A' de la conduite 10 est par exemple comprise entre 60° et 90°. Ceci assure une élongation du composite sous l'effet de la pression interne, et une coopération adéquate avec les nappes d'armures 24, 25.

L'épaisseur de chaque couche composite 32 à 36 est généralement comprise entre 0,10 mm et 0,30 mm, par exemple entre 0,12 mm et 0,17 mm, ou entre 0,22 mm et 0,27 mm.

Selon l'invention, la couche anti-délamination 38 est formée à partir d'un film polymère, d'un film polymère imprégné de fibres, de nanofibres, ou/et d'un mat de fibres pré-imprégnées avec un matériau polymère.

Le matériau polymère de la couche anti-délamination 38 est de même nature que le matériau polymère formant la matrice d'au moins une couche de renfort 32 à 36.

Par « de même nature », on entend au sens de la présente invention que le polymère de la couche anti-délamination 38 et le polymère de la matrice 40 sont propres à fondre et à former un mélange intime, sans séparation de phase, après refroidissement. Avantageusement, le polymère de la couche anti-délamination 38 et le polymère de la matrice 40 sont identiques.

Par exemple, le polymère de la couche anti-délamination 38 est à base d'une polyoléfine telle que du polyéthylène, à base d'un polyamide tel que du PA11 ou du PA12, ou à base d'un polymère fluoré tel que du polyfluorure de vinylidène (PVDF).

En variante, le polymère de la couche anti-délamination 38 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la ou de chaque couche anti-délamination est inférieure à 200 microns, et est notamment comprise entre 50 microns et 200 microns.

Les fibres de la couche anti-délamination 38 sont de préférence des fibres coupées ou des fibres courtes. La longueur maximale des fibres coupées et des fibres courtes est inférieure à 10 mm et est comprise entre 0,25 mm et 6 mm. Leur diamètre est avantageusement compris entre 12 microns et 190 microns.

Les fibres de la couche anti-délamination, lorsqu'elles sont présentes, sont par exemple des fibres de carbone, des fibres de verre, des fibres d'aramide, ou/et des fibres de basalte.

Les nanofibres de la couche anti-délamination 38 sont par exemple des nanofibres de carbone. Elles sont formées à base de nanotubes, notamment de nanotubes multifeuillets (MWNT). Elles possèdent un diamètre compris entre 8 nm et 50 nm et une longueur comprise entre 1 µm et 50 µm.

Chaque couche anti-délamination 38 présente avantageusement un module de traction supérieur à 3GPa à la fois dans le sens longitudinal et dans le sens transverse, et compris entre 3 GPa et 4 GPa, tel que mesuré par la Norme précitée.

Elle présente une résistance en traction maximale supérieure à 80 MPa est comprise notamment entre 90 MPa et 120 MPa dans le sens longitudinal, et entre 110 MPa et 130 MPa dans le sens transverse, telle que mesurée par la Norme précitée.

Chaque couche anti-délamination 38 présente avantageusement un module de compression supérieur à 3GPa à la fois dans le sens longitudinal et dans le sens transverse, et compris entre 3 GPa et 4 GPa, tel que mesurée par la Norme ASTM D638-14.

Chaque couche anti-délamination 38 présente un module de cisaillement supérieur à 1 GPa , est compris notamment entre 1,2 GPa et 1,6 GPa, tel que mesuré par la Norme ASTM D732-10.

Elle présente une résistance en cisaillement maximal supérieur à 60 MPa est comprise notamment entre 70 MPa et 90 MPa, telle que mesurée par la Norme ASTM D732-10.

Un exemple de film susceptible de former la couche anti-délamination 38 est le film Keta Spire^{®} KT-820 commercialisé par la société Solvay.

Dans l'exemple représenté sur la figure 2, au moins une couche anti-délamination 38 est interposée entre chaque paire de couches de renfort adjacentes 32, 34 ; 34, 36.

Les bandes composites 44 d'une première couche de renfort 32 sont enroulées suivant un angle opposé par rapport aux bandes composites 44 d'une deuxième couche de renfort 34 située à l'opposé de la première couche de renfort 32 par rapport à une couche anti-délamination 38.

Ainsi, si l'angle d'enroulement β des bandes composites 44 d'une première couche de renfort 32 par rapport à l'axe A-A' de la conduite 10 est égal à + β, β étant compris entre 60° et 80°, l'angle d'enroulement des bandes composites 44 d'une deuxième couche de renfort 34 par rapport à l'axe A-A', la deuxième couche de renfort 34 étant située à l'opposé de la première couche de renfort 32 par rapport à une couche anti-délamination 38 est par exemple de - β, avec β compris entre 60° et 80°.

Le nombre de couches de renfort 34 à 36 est par exemple compris entre 6 et 50, le nombre de couches anti-délamination 38 est compris entre 5 et 49, chaque couche anti-délamination 38 étant disposée entre deux couches de renfort 34 à 36 adjacentes.

Dans l'exemple représenté sur la figure 1, la conduite flexible 10 comporte une nappe d'armures interne 24, et une nappe d'armures externe 25 autour de laquelle est disposée la gaine extérieure 30.

Chaque nappe d'armures 24, 25 comporte des éléments d'armure 50 longitudinaux enroulés à pas long autour de l'axe A-A' de la conduite.

Par « enroulé à pas long », on entend que la valeur absolue par rapport à l'axe A-A' de l'angle d'hélice est inférieure à 50°, et est typiquement comprise entre 25° et 45°.

Les éléments d'armure 50 d'une première nappe 24 sont enroulés généralement suivant un angle opposé par rapport aux éléments d'armure 50 d'une deuxième nappe 25. Ainsi, si l'angle d'enroulement par rapport à l'axe A-A' des éléments d'armure 50 de la première nappe 24 est égal à + α, α étant compris entre 25° et 45°, l'angle d'enroulement par rapport à l'axe A-A' des éléments d'armure 50 de la deuxième nappe 25 disposée au contact de la première nappe 24 est par exemple de - α, avec α compris entre 25° et 45°.

Les éléments d'armure 50 sont par exemple formés par des fils métalliques. En variante, les éléments d'armure 50 sont formés par des fils ou rubans plats en composite renforcés avec des fibres de carbone.

La combinaison d'un angle β d'enroulement des bandes composites 44 compris entre 55° et 85°, de préférence entre 60 et 80°, avec un angle α d'enroulement des éléments d'armure 50 compris entre 25° et 45°, empêche l'élongation de la structure composite 22 par effet de compensation produit par les nappes d'armures 24, 25.

La combinaison optimale entre les angles α, β d'enroulement réduit drastiquement les contraintes dans l'ensemble tubulaire formé par la gaine interne 20 et la structure composite de renfort 22, et donc l'épaisseur nécessaire pour résister aux efforts de flexion, de pression interne ou/et d'écrasement (« collapse »).

En outre, grâce à la raideur axiale de la structure composite de renfort 22, les nappes d'armures de traction 24, 25 résistent mieux à la compression axiale sous les conditions de pression externe du grand fond.

En outre, l'angle α d'enroulement des éléments d'armure 50 compris entre 25° et 45°, pris en combinaison avec l'angle β d'enroulement des bandes composites 44 compris entre 60° et 80 ° autorise une compression de la structure composite de renfort 22, réduisant le rayon de courbure minimal (« minimal bending radius » ou « MBR » en anglais).

La déformation admissible en traction à l'extrados de l'ensemble tubulaire formé par la gaine interne 20 et la structure composite de renfort 22 est supérieure à 1%. Cette déformation induit le rayon d'enroulement compatible avec la plupart des équipements de fabrication et de pose.

La gaine externe 30 est destinée à empêcher la perméation de fluide depuis l'extérieur de la conduite flexible 10 vers l'intérieur. Elle est avantageusement réalisée en matériau polymère, notamment à base d'une polyoléfine, telle que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Chaque couche anti-usure 26 est formée par exemple de PA (polyamide), PE (polyéthylène), PVDF (polyfluorure de vinylidène), PEEK (polyétheréthercétone), PEKK (polyéthercétonecétone). Une couche anti-usure 26 est disposée entre la structure composite 22 et la première nappe d'armures de traction 24. Une autre couche anti-usure 26 est placée entre chaque paire de nappe d'armures 24, 25, avantageusement comme indiqué dans la Norme API 17J précitée.

Le ruban de renfort 28 est formé par exemple d'une couche anti-flambement de résistance élevée. Cette couche est par exemple en aramide. Le ruban est enroulé autour de la nappe d'armures 25 située la plus à l'extérieur, entre la nappe d'armures 25 et la gaine externe 30, avantageusement comme indiqué dans la Norme API 17J précitée.

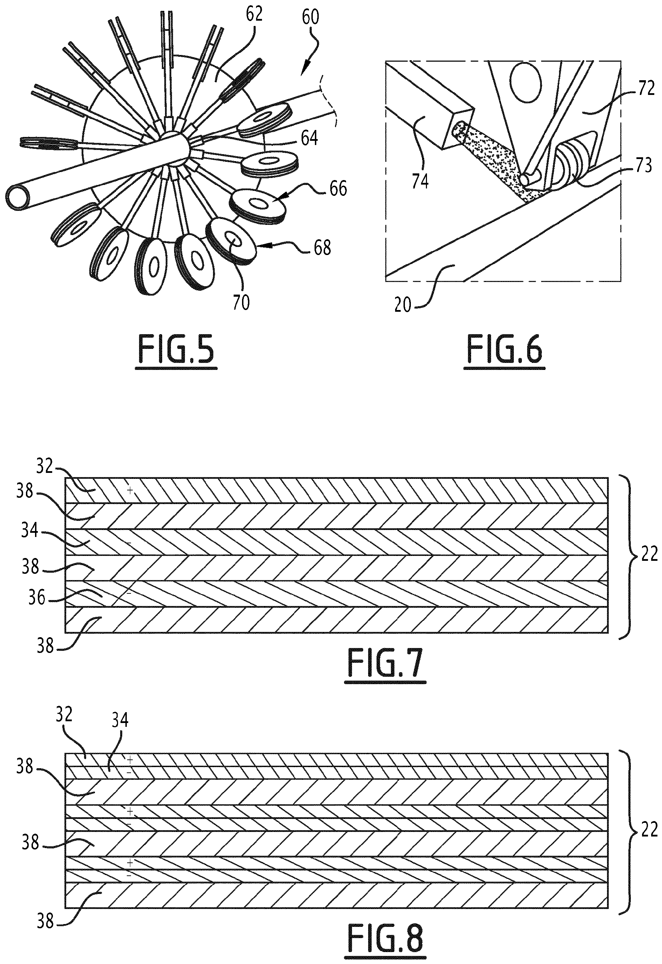

La structure composite 22 de la conduite flexible 10 est fabriquée de préférence dans un poste de fabrication 60, après formation de la gaine tubulaire 20, comme représenté sur les figures 5 et 6.

Le poste de fabrication 60 comprend un plateau tournant 62 définissant un orifice central 64 de passage de la gaine tubulaire 20 et une pluralité de dérouleurs 66, 68, portés par le plateau tournant 62.

Chaque dérouleur 66, 68 est propre à dérouler respectivement des bandes composites 44 destinées à former chaque couche de renfort 32 à 36 et des bandes intermédiaires, destinées à former la couche anti-délamination 38.

Chaque dérouleur 66, 68 comporte une bobine 70 sur laquelle est enroulée une bande, un organe 72 de guidage et d'application de la bande sur la gaine tubulaire 20 ou sur une couche formée autour de la gaine tubulaire 20, et un appareil de chauffage 74.

L'organe 72 de guidage et d'application comprend ici un galet d'application 73. L'appareil de chauffage comprend ici un laser de soudure.

Un procédé de fabrication de la conduite flexible 10 selon l'invention va maintenant être décrit.

Initialement, la gaine tubulaire 20 est formée, par exemple par extrusion. La gaine 20 est amenée dans le poste de fabrication 60 et est déplacée en translation à travers l'ouverture centrale 64.

Le plateau 62 est entraîné en rotation autour de l'axe de translation de la gaine 20. Chaque bande composite 44 et chaque bande intermédiaire sont déroulées successivement des bobines 70 et sont amenées au contact de la gaine 20 ou d'une couche formée autour de la gaine 20 à l'aide de l'organe de guidage et d'application 72.

Une fois en contact, chaque bande composite 44 et chaque bande intermédiaire est enroulée suivant un angle d'enroulement choisi autour de la gaine 20 ou de la couche formée autour de la gaine 20 et est liée à cette couche par fusion engendrée par l'appareil de chauffage 74.

Ainsi, la couche de renfort 32 la plus à l'intérieur est appliquée sur la gaine tubulaire 20 et est liée à la gaine tubulaire 20. Les couches de renfort successives 32 à 36 sont formées et sont liées entre elles, en alternance avec les couches anti-délamination 38.

Chaque couche anti-délamination 38 est interposée entre deux couches de renfort 32 à 36 et est liée à chacune de ces deux couches de renfort 32 à 36.

Les bandes composites 44 d'une même couche de renfort 32 à 36 sont liées les unes aux autres par leurs bords latéraux, formant une couche continue.

De même, les bandes intermédiaires d'une même couche anti-délamination 38 sont liées les unes aux autres par leurs bords latéraux, formant une couche continue.

La structure composite 22 est ainsi formée.

Puis, les éléments d'armure 50 des nappes d'armures de traction 24, 25 sont enroulés autour de la structure composite de renfort 22, de manière non liée avec la structure composite de renfort 22. Avantageusement une couche anti-usure 26 est interposée entre la structure composite 22 et la première nappe d'armures de traction 24, et entre chaque paire de nappes d'armures de traction 24, 25.

Puis, un ruban de renfort 28 est enroulé autour de la nappe d'armures de traction 25 la plus à l'extérieur.

La gaine externe 30 est ensuite formée autour des nappes d'armures de traction 24, 25, de manière non liée avec les nappes d'armures 24, 25.

Avantageusement, toutes les couches situées à l'extérieur de la structure composite de renfort 22 sont non liées.

Ainsi, une conduite flexible 10 présentant un passage central 13 dégagé et lisse est fabriquée par le procédé selon l'invention. Cette conduite flexible est de type « smooth bore », ce qui évite les perturbations sur l'écoulement du fluide traversant le passage central 13. La conduite flexible 10 est particulièrement légère, puisqu'elle est dépourvue de carcasse interne métallique et de voûte de pression, grâce à la présence de la structure composite de renfort 22 liée à la gaine tubulaire 20.

Ceci fournit une bonne résistance à l'écrasement de la conduite 10, notamment aux très grandes profondeurs. En outre, la conduite 10 ne présente pas de problèmes de corrosion sous contrainte notamment en présence de sulfure d'hydrogène. Elle présente une bonne résistance en température, et un diamètre externe plus faible pour des résistances comparables. Le diamètre de pose des nappes d'armures 24, 25 est également plus faible, ce qui limite les effets de flambement latéral.

La présence de couches anti-délamination 38 placées régulièrement entre des couches de renfort 32 à 36 garantit une excellente tenue mécanique de la conduite 10 et de très bonnes propriétés de résistance mécanique de la structure composite 22. En particulier, une réduction significative du rayon de courbure minimal est obtenue.

La couche anti-délamination 38 est solidarisée avec des couches de renfort 32 à 36 en composite par fusion grâce à sa compatibilité moléculaire assurant ainsi la transmission des charges (ou des contraintes) d'une couche de renfort 32 à 36 à l'autre grâce à ses propriétés mécaniques en contrainte et grâce à ses déformations en traction et cisaillement. Ainsi, les couches de renfort 32 à 36 en composite encaissent des charges jusqu'à leur rupture complète.

Par ailleurs, grâce aux couches anti-délamination 38, l'ensemble tubulaire formé par la gaine interne 20 et la structure composite de renfort 22 reste parfaitement étanche même si la gaine interne est endommagée ou/et même si la résine matricielle des couches de renfort 32 à 36 est microfissurée

La structure composite 22 d'une deuxième conduite flexible 10 selon l'invention est illustrée par la figure 7. A la différence de la conduite 10 illustrée par la figure 2, la structure de renfort 22 comporte une première couche de renfort 32 formée d'un enroulement de bandes composites 44 orientées suivant un angle +β, une couche anti-délamination 38, une deuxième couche de renfort 34 formée d'un enroulement de bandes composites 44 orientées suivant un angle - β, une couche anti-délamination 38, et une troisième couche de renfort 36 formée d'un enroulement de bandes composites 44 orientées suivant le même angle - β que la deuxième couche de renfort 32.

La structure composite 22 d'une troisième conduite flexible 10 selon l'invention est illustrée par la figure 8. A la différence de la conduite 10 illustrée par la figure 2, la structure de renfort 22 comporte une succession de paires de couches de renfort 32, 34, avec des angles opposés d'enroulement de bandes composite d'angles +β ; -β appliquées directement l'une sur l'autre. Une couche anti-délamination 38 est appliquée entre deux paires successives de couches de renfort 32, 34 appliquées l'une sur l'autre.

L'orientation angulaire des paires de couches de renfort 32, 34 est par exemple identique d'une paire de couches de renfort 32, 34 à l'autre (par exemple +β ; -β), ou varie d'une paire de couches de renfort à l'autre (par exemple alternance +β ; -β et -β ; +β).

Dans une variante (non représentée), une frette formée d'un fil métallique enroulé à pas court, c'est-à-dire avec un angle d'enroulement compris entre 80° et 90°, remplace le ruban de renfort 28.

Dans une variante (non représentée), au moins une fibre optique est disposée dans une couche de renfort 32 à 34 pour transporter des informations, et/ou pour effectuer de la détection de température et/ou de contraintes.

Dans une autre variante, illustrée par la figure 9, l'installation 15 comporte, depuis l'ensemble de surface 16 vers l'ensemble de fond 17 une ligne flexible 18 comportant un tronçon de tête 80, un tronçon de colonne montante verticale 82, un tronçon intermédiaire courbé 84, et un tronçon de fond 86 disposé sur le fond de l'étendue d'eau 14.

Dans cet exemple, le tronçon de colonne montante verticale 82, le tronçon intermédiaire courbé 84 et le tronçon de fond 86 sont formés de conduites 10 selon l'invention.

Au contraire, le tronçon de tête 80 est formé d'une conduite flexible non liée dépourvue de structure composite de renfort 22. Dans le tronçon de tête 80, la structure composite 22 est remplacée par une carcasse disposée dans la gaine interne tubulaire 20, et par une voûte de pression enroulée autour de la gaine tubulaire 20.

Le tronçon de colonne montante verticale 82 est formé d'une conduite flexible 10 tel qu'illustrée sur la figure 1.

Le tronçon intermédiaire courbé 84 diffère du tronçon de colonne montante verticale 82 en ce que la conduite 10 selon l'invention comporte quatre nappes d'armures successives séparées par des couches anti-usure 26.

Le tronçon de fond 86 diffère du tronçon de colonne montante 82 en ce qu'il est dépourvu de couches anti-usure 26.

## Revendications

1. - Conduite flexible (10) de transport de fluide, comportant :
- une gaine tubulaire (20) d'axe central (A-A') définissant un passage (13) interne de circulation de fluide ;
- une structure composite tubulaire (22), appliquée sur la gaine tubulaire (20) et liée à la gaine tubulaire (20), la structure composite tubulaire (22) comportant au moins deux couches de renfort (32 à 36) laminées, chaque couche de renfort (32 à 36) comprenant une matrice (40) en polymère et des fibres de renfort (42) ;
- au moins une nappe d'armures de traction (24, 25), non liée à la structure composite tubulaire (22), la nappe d'armures de traction (24, 25) comprenant au moins un élément d'armure (50) enroulé autour de la structure composite tubulaire (22) ;
**caractérisée en ce que** la structure composite tubulaire (22) comporte au moins une couche anti-délamination (38) interposée entre deux couches de renfort (32 à 36) laminées.

2. - Conduite (10) selon la revendication 1, dans laquelle la ou chaque élément d'armure (50) est enroulé en hélice autour de l'axe central (A-A') avec un angle d'enroulement (α) compris entre 25° et 45°.

3. - Conduite (10) selon l'une des revendications 1 ou 2, dans laquelle la couche anti-délamination (38) est formée à partir d'un film polymère, d'un film polymère imprégné de fibres et/ou de nanofibres, ou/et d'un mat de fibres pré-imprégnées avec un matériau polymère.

4. - Conduite (10) selon la revendication 3, dans laquelle le matériau polymère de la couche anti-délamination (38) est de même nature que le matériau polymère formant la matrice (40) d'au moins une couche de renfort (32 à 36).

5. - Conduite (10) selon l'une quelconque des revendications précédentes, dans laquelle l'épaisseur de la ou de chaque couche anti-délamination (38) est inférieure à 200 microns, et est notamment comprise entre 50 microns et 200 microns.

6. - Conduite (10) selon l'une quelconque des revendications précédentes, dans laquelle au moins une couche de renfort (32 à 36) est formée à partir d'un enroulement hélicoïdal d'une bande composite (44) suivant un premier angle d'enroulement (β) autour de l'axe central (A-A'), le premier angle d'enroulement (β) étant compris entre 55° et 85°, notamment entre 60° et 80°.

7. - Conduite (10) selon l'une quelconque des revendications précédentes, dans laquelle une première couche de renfort (32 à 36) est formée à partir d'un enroulement hélicoïdal d'une bande composite (44) suivant un premier angle d'enroulement (+β) autour de l'axe central (A-A'), la deuxième couche de renfort (32 à 36) située à l'opposé de la première couche de renfort (32 à 36) par rapport à la couche anti-délamination (38) étant formée à partir d'un enroulement hélicoïdal d'une bande composite (44) suivant un deuxième angle d'enroulement (-β) autour de l'axe central (A-A'), opposé au premier angle d'enroulement (+β) autour de l'axe central (A-A').

8. - Conduite (10) selon l'une quelconque des revendications précédentes, dans laquelle la structure composite tubulaire (22) comporte au moins trois couches de renfort (32 à 36) laminées, et entre chaque paire de couches de renfort (32 à 36) adjacentes, une couche anti-délamination (38).

9. - Conduite (10) selon l'une quelconque des revendications précédentes, dans laquelle la structure composite tubulaire (22) comprend au moins trois couches de renfort (32 à 36) laminées, une première couche de renfort (32 à 36) et une deuxième couche de renfort (32 à 36) étant au contact l'une de l'autre, la structure composite tubulaire (22) comportant une couche anti-délamination (38) interposée entre la deuxième couche de renfort (32 à 36) et la troisième couche de renfort (32 à 36).

10. - Conduite (10) selon l'une quelconque des revendications précédentes, dans laquelle l'épaisseur de chaque couche de renfort (32 à 36) est inférieure à 1 mm et est comprise notamment entre 0,1 mm et 1 mm.

11. - Conduite (10) selon l'une quelconque des revendications précédentes, comportant une frette enroulée en spirale autour de la ou de chaque nappe d'armures de traction (24, 25).

12. - Installation (15) d'exploitation de fluide à travers une étendue d'eau (14), comportant :
- un ensemble de fond (17) ;
- un ensemble de surface (16) ;
- une ligne (18) de transport de fluide, raccordant l'ensemble de fond (17) à l'ensemble de surface (16), la ligne (18) comprenant un tronçon de fond (86) de transport de fluide, s'appuyant sur le fond de l'étendue d'eau (14), un tronçon sensiblement vertical (82) de colonne montante, et un tronçon intermédiaire (84) courbé raccordant le tronçon de fond (86) au tronçon sensiblement vertical (82), au moins un du tronçon de fond (86), du tronçon sensiblement vertical (82), et du tronçon intermédiaire (84) étant formé d'une conduite flexible (10) selon l'une quelconque des revendications précédentes.

13. - Installation (15) selon la revendication 12, dans laquelle la ligne (18) comprend un tronçon de tête (80) formé d'une conduite flexible non liée.

14. - Procédé de fabrication d'une conduite flexible (10), comprenant les étapes suivantes :
- fourniture d'une gaine tubulaire (20) d'axe central (A-A') définissant un passage (13) interne de circulation de fluide ;
- formation d'une structure composite tubulaire (22), appliquée sur la gaine tubulaire (20) et liée à la gaine tubulaire (20), la structure composite tubulaire (22) comportant au moins deux couches de renfort (32 à 36) laminées, chaque couche de renfort (32 à 36) comprenant une matrice (40) en polymère et des fibres de renfort (42) ;
- disposition, autour de la structure composite tubulaire (22), d'au moins une nappe d'armures de traction (24, 25), non liée à la structure composite tubulaire (22), la ou chaque nappe d'armures de traction (24, 25) comprenant au moins un élément d'armure (50) enroulé autour de la structure composite tubulaire (22) ;
**caractérisé en ce que** la structure composite tubulaire (22) comporte au moins une couche anti-délamination (38) interposée entre deux couches de renfort (32 à 36) laminées.

15. - Procédé selon la revendication 14, dans lequel la formation de la structure composite tubulaire (22) comprend les étapes suivantes :
- enroulement autour de la gaine tubulaire (20) d'une bande composite (44) comportant une matrice (40) en polymère et des fibres de renfort (42), et chauffage de la bande composite (44) enroulée pour former une première couche de renfort (32 à 36) ;
- enroulement autour de la première couche de renfort (32 à 36), d'une bande d'un film polymère, d'un film polymère imprégné de fibres, ou/et d'un mat de fibres pré-imprégnées avec un matériau polymère, et chauffage de la bande de film polymère, de film polymère imprégné de fibres, ou/et de mat de fibres pré-imprégnées avec un matériau polymère pour former la couche anti-délamination (38), et pour l'assembler sur la première couche de renfort (32 à 36) ;
- enroulement autour de la couche anti-délamination (38) d'une bande composite (44) comportant une matrice (40) en polymère et des fibres de renfort (42), chauffage de la bande composite (44) enroulée pour former une deuxième couche de renfort (32 à 36).

## Patentansprüche

1. Flexible Leitung (10) zum Fluid-Transport, umfassend:
- einen rohrförmigen Mantel (20) mit einer Mittelachse (A-A'), die einen inneren Durchgang (13) zur Zirkulation eines Fluids definiert;
- eine rohrförmige Verbundstruktur (22), die auf den rohrförmigen Mantel (20) aufgebracht und mit dem rohrförmigen Mantel (20) verbunden ist, wobei die rohrförmige Verbundstruktur (22) mindestens zwei laminierte Verstärkungsschichten (32 bis 36) aufweist, jede Verstärkungsschicht (32 bis 36) umfassend eine Polymermatrix (40) und Verstärkungsfasern (42);
- mindestens eine Zugbewehrungsmatte (24, 25), die nicht mit der rohrförmigen Verbundstruktur (22) verbunden ist, die Zugbewehrungsmatte (24, 25) umfassend mindestens ein Bewehrungselement (50), das um die rohrförmige Verbundstruktur (22) gewickelt ist;
**dadurch gekennzeichnet, dass** die rohrförmige Verbundstruktur (22) mindestens eine Anti-Entlaminationsschicht (38) umfasst, die zwischen zwei laminierten Verstärkungsschichten (32-36) eingefügt ist.

2. Leitung (10) nach Anspruch 1, wobei das oder jedes Bewehrungselement (50) spiralförmig mit einem Wicklungswinkel (α) zwischen 25° und 45° um die Mittelachse (A-A') gewickelt ist.

3. Leitung (10) nach einem der Ansprüche 1 oder 2, wobei die Anti-Entlaminationsschicht (38) aus einem Polymerfilm, einem mit Fasern und/oder Nanofasern imprägnierten Polymerfilm oder/und einer Matte aus mit einem Polymermaterial vorimprägnierten Fasern gebildet ist.

4. Leitung (10) nach Anspruch 3, wobei das Polymermaterial der Anti-Entlaminationsschicht (38) von derselben Art ist wie das Polymermaterial, das die Matrix (40) mindestens einer Verstärkungsschicht (32 bis 36) bildet.

5. Leitung (10) nach einem der vorherigen Ansprüche, wobei die Stärke der oder jeder Anti-Entlaminationsschicht (38) weniger als 200 Mikrometer ist und insbesondere zwischen 50 Mikrometer und 200 Mikrometer ist.

6. Leitung (10) nach einem der vorherigen Ansprüche, wobei mindestens eine Verstärkungsschicht (32 bis 36) aus einer spiralförmigen Wicklung eines Verbundbands (44) unter einem ersten Wicklungswinkel (β) um die Mittelachse (A-A') gebildet ist, wobei der erste Wicklungswinkel (β) zwischen 55° und 85°, insbesondere zwischen 60° und 80°, ist.

7. Leitung (10) nach einem der vorherigen Ansprüche, wobei eine erste Verstärkungsschicht (32 bis 36) aus einer spiralförmigen Wicklung eines Verbundbands (44) mit einem ersten Wicklungswinkel (+β) um die Mittelachse (A-A') gebildet ist, wobei die zweite Verstärkungsschicht (32-36), die der ersten Verstärkungsschicht (32-36) in Bezug auf die Anti-Entlaminierungsschicht (38) gegenüberliegt, aus einer spiralförmigen Wicklung eines Verbundstreifens (44) in einem zweiten Wicklungswinkel (-β) um die Mittelachse (A-A') gebildet ist, der dem ersten Wicklungswinkel (+β) um die Mittelachse (A-A') entgegengesetzt ist.

8. Leitung (10) nach einem der vorherigen Ansprüche, wobei die rohrförmige Verbundstruktur (22) mindestens drei laminierte Verstärkungsschichten (32 bis 36) und zwischen jedem Paar benachbarter Verstärkungsschichten (32 bis 36) eine Anti-Entlaminationsschicht (38) aufweist.

9. Leitung (10) nach einem der vorherigen Ansprüche, wobei die rohrförmige Verbundstruktur (22) mindestens drei laminierte Verstärkungsschichten (32-36) umfasst, wobei eine erste Verstärkungsschicht (32-36) und eine zweite Verstärkungsschicht (32-36) einander berühren, die rohrförmige Verbundstruktur (22) umfassend eine Anti-Entlaminationsschicht (38), die zwischen der zweiten Verstärkungsschicht (32-36) und der dritten Verstärkungsschicht (32-36) eingefügt ist.

10. Leitung (10) nach einem der vorherigen Ansprüche, wobei die Stärke jeder Verstärkungsschicht (32 bis 36) weniger als 1 mm ist und insbesondere zwischen 0,1 mm und 1 mm ist.

11. Leitung (10) nach einem der vorherigen Ansprüche, umfassend einen Bund, der spiralförmig um die oder jede Zugbewehrungsschicht (24, 25) gewickelt ist.

12. Anlage (15) zur Nutzung von Fluid durch ein Gewässer (14), umfassend:
- eine Bodeneinheit (17);
- eine Oberflächeneinheit (16);
- eine Leitung (18) für Fluidtransport, die die Bodeneinheit (17) mit der Oberflächeneinheit (16) verbindet, die Leitung (18) umfassend einen Bodenabschnitt (86) für Fluidtransport, der auf dem Boden des Gewässers (14) aufliegt, einen im Wesentlichen vertikalen Steigrohrabschnitt (82), und einen gebogenen Zwischenabschnitt (84), der den Bodenabschnitt (86) mit dem im Wesentlichen vertikalen Abschnitt (82) verbindet, wobei mindestens eines von dem Bodenabschnitt (86), dem im Wesentlichen vertikalen Abschnitt (82) und dem Zwischenabschnitt (84) aus einer flexiblen Leitung (10) nach einem der vorherigen Ansprüche gebildet ist.

13. Anlage (15) nach Anspruch 12, wobei die Leitung (18) einen Kopfabschnitt (80) umfasst, der aus einer nicht verbundenen flexiblen Leitung gebildet ist.

14. Verfahren zur Herstellung einer flexiblen Leitung (10), umfassend die folgenden Schritte:
- Bereitstellen eines rohrförmigen Mantels (20) mit einer Mittelachse (A-A'), die einen inneren Durchgang (13) zur Zirkulation eines Fluids definiert;
- Bilden einer rohrförmigen Verbundstruktur (22), die auf den rohrförmigen Mantel (20) aufgebracht und mit dem rohrförmigen Mantel (20) verbunden ist, wobei die rohrförmige Verbundstruktur (22) mindestens zwei laminierte Verstärkungsschichten (32 bis 36) aufweist, jede Verstärkungsschicht (32 bis 36) umfassend eine Polymermatrix (40) und Verstärkungsfasern (42);
- Anordnen mindestens einer Zugbewehrungsschicht (24, 25), die nicht mit der rohrförmigen Verbundstruktur (22) verbunden ist, um die rohrförmige Verbundstruktur (22), die oder jede Zugbewehrungslage (24, 25) umfassend mindestens ein Bewehrungselement (50), das um die rohrförmige Verbundstruktur (22) gewickelt ist;
**dadurch gekennzeichnet, dass** die rohrförmige Verbundstruktur (22) mindestens eine Anti-Entlaminationsschicht (38) umfasst, die zwischen zwei laminierten Verstärkungsschichten (32-36) eingefügt ist.

15. Verfahren nach Anspruch 14, wobei die Bildung der rohrförmigen Verbundstruktur (22) die folgenden Schritte umfasst:
- Wickeln eines Verbundbands (44) umfassend eine Polymermatrix (40) und Verstärkungsfasern (42) um den rohrförmigen Mantel (20) und Erhitzen des gewickelten Verbundbands (44), um eine erste Verstärkungsschicht (32-36) zu bilden;
- Wickeln eines Bands aus einem Polymerfilm, einem faserimprägnierten Polymerfilm oder/und einer Fasermatte, die mit einem Polymermaterial vorimprägniert ist, um die erste Verstärkungsschicht (32-36) und Erhitzen des Bands aus dem Polymerfilm, dem faserimprägnierten Polymerfilm oder/und der Fasermatte, die mit einem Polymermaterial vorimprägniert ist, um die Anti-Entlaminationsschicht (38) zu bilden und diese auf der ersten Verstärkungsschicht (32-36) zu montieren;
- Wickeln eines Verbundbands (44) mit einer Polymermatrix (40) und Verstärkungsfasern (42) um die Anti-Entlaminationsschicht (38), Erhitzen des gewickelten Verbundbands (44), um eine zweite Verstärkungsschicht (32-36) zu bilden.

## Claims

1. A flexible pipe (10) for transporting a fluid, comprising:
- a tubular sheath (20) with a central axis (A-A') defining an internal fluid circulation passage (13);
- a tubular composite structure (22), applied to the tubular sheath (20) and bonded to the tubular sheath (20), the tubular composite structure (22) comprising at least two laminated reinforcement layers (32 to 36), each reinforcement layer (32 to 36) comprising a polymer matrix (40) and reinforcing fibres (42);
- at least one tensile armour ply (24, 25), not bonded to the tubular composite structure (22), the tensile armour ply (24, 25) comprising at least one armouring element (50) wrapped around the tubular composite structure (22);
**characterised in that** the tubular composite structure (22) has at least one anti-delamination layer (38) interposed between two laminated reinforcement layers (32 to 36).

2. The pipe (10) according to claim 1, wherein the or each armouring element (50) is helically wound about the central axis (A-A') with a winding angle (α) of between 25° and 45°.

3. The pipe (10) according to one of the claims 1 or 2, wherein the anti-delamination layer (38) is formed from a polymer film, a polymer film impregnated with fibres, nanofibers, and/or a mat of fibres pre-impregnated with a polymer material.

4. The pipe (10) according to claim 3, wherein the polymer material of the anti-delamination layer (38) is of the same nature as the polymer material forming the matrix (40) of at least one reinforcement layer (32 to 36).

5. The pipe (10) according to any of the preceding claims, wherein the thickness of the or each anti-delamination layer (38) is less than 200 microns and is in particular between 50 microns and 200 microns.

6. The pipe (10) according to any of the preceding claims, wherein at least one reinforcement layer (32 to 36) is formed from a helical winding of a composite strip (44) at a first winding angle (β) around the central axis (A-A'), the first winding angle (β) being between 55° and 85°, in particular between 60° and 80°.

7. The pipe (10) according to any of the preceding claims, wherein a first reinforcement layer (32 to 36) is formed from a helical winding of a composite strip (44) at a first winding angle (+β) about the central axis (A-A'), the second reinforcement layer (32 to 36) opposite the first reinforcement layer (32 to 36) with respect to the anti-delamination layer (38) being formed from a helical winding of a composite strip (44) at a second winding angle (-β) about the central axis (A-A'), opposite the first winding angle (+β) about the central axis (A-A').

8. The pipe (10) according to any one of the preceding claims, wherein the tubular composite structure (22) comprises at least three laminated reinforcement layers (32 to 36), and between each pair of adjacent reinforcement layers (32 to 36), an anti-delamination layer (38).

9. The pipe (10) according to any one of the preceding claims, wherein the tubular composite structure (22) comprises at least three laminated reinforcement layers (32 to 36), a first reinforcement layer (32 to 36) and a second reinforcement layer (32 to 36) being in contact with each other, the tubular composite structure (22) having an anti-delamination layer (38) interposed between the second reinforcement layer (32 to 36) and the third reinforcement layer (32 to 36).

10. The pipe (10) according to any one of the preceding claims, in which the thickness of each reinforcement layer (32 to 36) is less than 1 mm and is in particular between 0.1 mm and 1 mm.

11. The pipe (10) according to any one of the preceding claims, comprising a hoop wound spirally around the or each tensile armour ply (24, 25).

12. A facility (15) for extracting a fluid through a body of water (14), comprising:
- a bottom assembly (17);
- a surface assembly (16);
- a fluid transport line (18) connecting the bottom assembly (17) to the surface assembly (16), the line (18) comprising a fluid transport bottom section (86) resting on the floor of the body of water (14), a substantially vertical riser section (82), and a curved intermediate section (84) connecting the bottom section (86) to the substantially vertical section (82), at least one of the bottom section (86), the substantially vertical section (82), and the intermediate section (84) being formed from a flexible pipe (10) according to any one of the preceding claims.

13. The facility (15) according to claim 12, wherein the line (18) comprises a head segment (80) formed of an unbonded flexible pipe.

14. A method of manufacturing a flexible pipe (10), comprising the following steps:
- providing a tubular sheath (20) with a central axis (A-A') defining an internal fluid circulation passage (13);
- forming a tubular composite structure (22), applied to the tubular sheath (20) and bonded to the tubular sheath (20), the tubular composite structure (22) comprising at least two laminated reinforcement layers (32 to 36), each reinforcement layer (32 to 36) comprising a polymer matrix (40) and reinforcing fibres (42);
- placing, around the composite tubular structure (22), at least one tensile armour ply (24, 25), not bonded to the tubular composite structure (22), the or each tensile armour ply (24, 25) comprising at least one armouring element (50) wrapped around the tubular composite structure (22);
**characterised in that** the tubular composite structure (22) has at least one anti-delamination layer (38) interposed between two laminated reinforcement layers (32 to 36).

15. The method according to claim 14, wherein forming the tubular composite structure (22) comprises the following steps:
- winding a composite strip (44), comprising a polymer matrix (40) and reinforcing fibres (42), around the tubular sheath (20) and heating the wound composite strip (44) to form a first reinforcement layer (32 to 36);
- winding a web of polymer film, fibre-impregnated polymer film, or/and fibre mat pre-impregnated with polymer material around the first reinforcement layer (32 to 36), and heating the web of polymer film, fibre-impregnated polymer film, or/and fibre mat pre-impregnated with polymer material to form the anti-delamination layer (38), and to bond it to the first reinforcement layer (32 to 36);
- winding a composite strip (44), comprising a polymer matrix (40) and reinforcing fibres (42), around the tubular sheath (38), and heating the wound composite strip (44) to form a second reinforcement layer (32 to 36);
